# EUROPEAN PATENT APPLICATION

(11) **EP 4 439 205 A1**
(43) Date of publication of application: **02.10.2024**
(21) Application number: 23165038.3
(22) Date of filing: 29.03.2023
(51) Int. Cl.: G05B 19/418

(54) **VERIFYING THE DESIGN OF A FUNCTION MODULE FOR A MODULAR INDUSTRIAL PLANT**

(71) Applicant: ABB SCHWEIZ AG, 5400 Baden (CH)
(72) Inventor: HOERNICKE, Mario, 76829 Landau (DE); SARKAR, Santonu, 560076 Bangalore (IN)
(74) Representative: Maiwald GmbH

(57) **Abstract**

A computer-implemented method (100) for verifying the design of a function module (2) for use in a modular industrial plant (1), wherein the function module (2) comprises control logic configured to accept sensor data and actuate a physical process module such that at least one process quantity and/or state quantity of the process module can be kept near a desired set-point value, as well as logic to accept commands from a superordinate management system, and communication between logics, as well as between the function module (2) and the rest of the modular industrial plant (1), is by input/output channels (31-35) representing parameters and/or variables, the method comprising the steps of:
• obtaining (110) a ruleset (4) comprising at least requirements for I/O channels (31-35) and their connections that are necessary conditions for the function module (2) to perform its intended function in the modular industrial plant (1);
• checking (120) whether the input/output channels (31-35) of the function module (2) and their connections meet the rules in the ruleset (4); and
• in response to determining that at least one rule in the ruleset (4) is not met, determining (130) that the design of the function module (2) has an error, and preventing (190) use of the function module (2) in the modular industrial plant (1).

## Description

### FIELD OF THE INVENTION

The invention relates to aiding the design of function modules for modular industrial plants with the goal of detecting any design errors at an earlier stage.

### BACKGROUND

Modular process plants allow a plant operator to switch between producing different products. For example, it might take only a few weeks to produce a year's supply of each particular product. In this case, it is not economical in terms of hardware and in terms of space to have a fixed plant for each product. Rather, when switching to manufacturing a new product, the right process modules are picked from a pool of available modules to form a plant that produces this product. This means that some process modules in the pool of available modules might be re-used in multiple different plants.

A significant activity during the engineering phase of modular plant design is function module engineering. A function module is designed using graphical module engineering tool. The tool allows the developer to define the HMI, IO Tags, define services, and configure the state machine corresponding to each service. Once the module is designed, it must be verified and validated before it is released for plant-level engineering and integration with other modules. From the business point of view, failures found earlier in the engineering are less expensive than the once found later. As a rule of thumb, there is a factor of 10 in costs between the failure found in the phases. Meaning, finding an error already during control engineering is 10 times less expensive than finding it during factory acceptance test (FAT). Finding an error in FAT is 10 times less expensive than finding it during site acceptance test, etc. Hence, the is easily a factor of 100 in cost increase, the later an error is found.

### OBJECTIVE OF THE INVENTION

It is therefore an objective of the present invention to facilitate the detecting of design errors in function module at an early stage, so as to reduce their adverse consequences as much as possible.

This objective is achieved by a method according to the independent claim. Further advantageous embodiments are detailed in the dependent claims.

### DISCLOSURE OF THE INVENTION

The invention provides a computer-implemented method for verifying the design of a function module for use in a modular industrial plant. A function module is software that is built to run on a physical process module of the modular industrial plant. This software may be designed given an already existing physical process module. But the function module may also be designed first, at a time when the corresponding physical process module does not yet exist. That is, after the software has been engineered and tested, the corresponding physical process module may be built. This means that errors in the design of the function module may be remedied without changing hardware.

The function module comprises control logic configured to accept sensor data and actuate a physical process module such that at least one process quantity and/or state quantity of the process module can be kept near a desired set-point value. The function module also comprises logic to accept commands from a superordinate management system. Communication between logics, as well as between the function module and the rest of the modular industrial plant, is by input/output channels representing parameters and/or variables.

In the course of the method, a ruleset is obtained. This ruleset comprises at least requirements for I/O channels and their connections that are necessary conditions for the function module to perform its intended function in the modular industrial plant. It is then checked whether the input/output channels in the function module and their connections meet the rules in the ruleset. In response to determining that at least one rule in the ruleset is not met, determining that the design of the function module has an error. The use of the function module in the industrial plant is then prevented. For example, a system that implements the method may refuse to upload the function module software to hardware of a physical process module if the function module is determined to have an error; rather, an error message may alert the designer of the function module to the concrete identified error. Thus, the designer is forced to remedy the error.

It was found that inconsistencies in the list of input/output channels are among the most frequent reasons why a function module does not work as expected. At the same time, many consistency checks in this list of input/output channels may be made offline without having to actually execute the function module. Previous module design tools do not perform any consistency and conflict checks. That is, the design tool will let the module designer make arbitrary connections between input/output channels of different entities without complaining that a particular connection does not make any sense. The design tool will also not complain if a connection that should be there is missing.

Of course, identification of errors using a finite ruleset cannot be exhaustive. There are almost infinitely many different ways of making errors. However, a few well-known errors account for a very large share of the total number of errors in function modules. By identifying and eliminating these errors in an early stage of the design, the probability that undiscovered errors remain in the function module is greatly reduced. Every single error that is found at an early stage represents substantial savings of costs that would have been incurred if that particular error had been found later, e.g., during Factory Acceptance Test, FAT, or Site Acceptance Test, SAT.

Examples of possible rules for detecting frequent errors in the list of input/output channels are given below.

In one example, a rule may stipulate that all parameters and/or variables must have a measurement unit attached. Without such a measurement unit, the physical dimension of the parameter and/or variable is unclear. In particular, it is not evident how the affected parameter and/or variable may reasonably be brought together with other parameters and/or variables.

In another example, a rule may stipulate that whenever a parameter and/or variable is passed from one logic or entity to another, the measurement unit associated with this parameter and/or variable on the sending end must match the measurement unit associated with this parameter and/or variable on the receiving end. In this manner, it is avoided that the receiving end gets and processes something completely different from what it expects, with unpredictable results. For example, if the receiving end expects a pressure reading that is measured in bar, and the sending end transmits "5 volts" to the receiving end, the receiving end might interpret this as "5 bar" even though the voltage is not connected to the sought pressure in any way. Rather, it is probable that the connection of the output in volts to the input that expects bars is a mistake that the designer of the function module made when manually drawing a connection in the design tool.

In another example, a rule may stipulate that nested ranges for parameters and/or variables must be consistent. In particular, for the purpose of determining whether an alarm shall be raised with respect to a process variable, different threshold values are frequently defined. For example, a "low" alarm may be raised if the variable drops below a first "low" threshold value, and a "low-low" alarm may be raised if the variable drops further below a second "low-low" threshold value. Likewise, a "high" alarm may be raised if the variable rises above a first "high" threshold value, and a "high-high" alarm may be raised if the variable rises further above a second "high-high" threshold value. That is, the normal range is between the "low" threshold and the "high" threshold, and this is nested in an area between the "low-low" and "high-high" thresholds where there is at least no too large deviation from the normal range. For this alarm system to work as expected, on the scale of the variable, the thresholds must be in the order "low-low", "low", "high" and "high-high". Malfunctions may occur if the order is not correct. For example, a function module designer may inadvertently mix up two thresholds by overlooking that one of them has a minus sign.

In another example, a rule may stipulate that set-points for parameters and/or variables must be in the allowed range for these parameters and/or variables. It would not be logical to actively move a parameter and/or variable towards a value that is, by virtue of being outside the allowed range, not desirable.

In another example, a rule may stipulate that values to be written to a parameter and/or variable must be compatible with the type of the parameter and/or variable. For example, it is not meaningful to assign a numeric value to a Boolean variable that can only have the two values "True" and "False". Also, writing a high integer value to a variable that is too small to accommodate this high value may lead to an "integer overflow", causing the value to be clipped at the maximum possible value or to "wrap around" starting from zero. Any subsequent calculations performed after such an "integer overflow" will yield wrong end results.

In another example, a rule may stipulate that connections between entities are all between an output channel of the one entity and an input channel of the other entity. If two input channels are connected to each other, the one is waiting for input that never comes. If two output channels are connected to each other, a sending end may convey a value that in fact never arrives at the intended receiving end. Either way, information is not flowing as intended, so the functionality of the physical process module that is running with such faulty logic is impeded.

In another example, a rule may stipulate that all input channels that are required for operation of the function module, and/or of one of its logics, are connected. Without a value for one or more required inputs, the module cannot function, so this is very likely an omission.

On top of the input/output channels of the function module, in a particularly advantageous embodiment, dependencies of the function module and/or at least one of its logics may be checked. To this end, a topology of the function module is determined. This topology may at least partially correspond to the layout of a human-machine interface, HMI. But this is not required. The topology may just as well comprise variables and functions that are not visible in the HMI.

From the topology, a graph of dependencies in which the function module, and/or at least one of its logics, are involved is determined. Nodes in this graph may comprise, for example, the function module, logics of this function module, or process elements such as motors, valves and other actuators.

The graph is then traversed using any suitable method, and during such traversing, encountered nodes of the graph are recorded. From the encountered nodes, it is determined, based on at least one predetermined criterion, whether the design of the function module has an error. In particular, there are some tell-tale signatures that, if present in the encountered nodes, will indicate that the design of the function module has an error.

In one example, in response to determining, from the encountered nodes, that there is a circular dependency of nodes, the design of the function module may be determined to have an error. Such a circular dependency cannot be fulfilled, and therefore cannot correspond to a real requirement of the to-be-executed industrial process.

In another example, it may be determined whether all encountered nodes possess a set of required properties, and/or whether all these properties conform to a predetermined specification. If the outcome of either one of this determinings is negative, it is then determined that the design of the function module has an error. For example, unbeknownst to the designer of the function module, another module that is re-used in this function module may avail itself of still further function modules that require certain inputs. If these inputs are not provided, then the another module, and ultimately the function module under test, may not function. The required specification may, for example, be the VDI 2658 specification that describes standard interfaces for modular industrial plants.

In a further particularly advantageous embodiment, the function module has a set of services. Each such service can be in out of a set of states at any one time. The method further comprises determining, based at least in part on the set of states and/or transitions between states, according to at least one predetermined criterion, whether the design of the function module has an error.

In this context, the services provided by the function module may be regarded as somewhat analogous to services provided by a computer operating system. Each such service provides some of the functionality of the function module. One difference is that, during execution of an industrial process on a modular industrial plant, a service may also reach a state "completed" for a particular batch of product. Such a state "completed" does not exist in operating systems where there is no manufacturing of products in batches.

In particular, it may be checked whether particular desirable states, such as "running" or "completed", are in fact reachable. Thus, in response to determining that the reachability at least one state is dependent on at least one condition that cannot be fulfilled, and/or on at least two conditions that are mutually exclusive, it may be determined that the design of the function module has an error because the desired state is in fact not reachable. In a simple analogy, consider a cell phone provider offering a greatly discounted plan on the face of it, but then, in the fine print, limiting its availability to "orders placed in the seventh quarter of every hour". In principle, the discounted plan is there, but since there are only four quarters in every hour, it is in fact unobtainable.

Likewise, other program code in the function module that in fact cannot be reached and executed may be identified as an error in the design of the function module. While such code is not immediately harmful, its very presence indicates that something is not working as the designer of the function module had intended.

In a further particularly advantageous embodiment, in response to determining that at least one dependency for the reachability of at least one state is a circular dependency, it is determined that the design of the function module has an error. In this manner, a frequent source for deadlocks of the function module may be avoided: With a circular dependency, the service runs into a "chicken-and-egg" situation: The required chicken is not to be had without an egg, which in turn needs to come out of a chicken.

In a further advantageous embodiment, the set of states, and/or transitions between states, is evaluated based at least in part on a cause-effect matrix of states and transitions between states. In such a rendering of the transitions, more situations are clearly distinguishable as evident errors.

In particular, in response to determining that at least one cause is tied to multiple effects, and/or multiple causes are tied to a same effect, it may be determined that the design of the function module has an error.

In a further particularly advantageous embodiment, in response to determining that two services can be in a running state simultaneously despite being mutually exclusive according to a predetermined safety condition, it is determined that the design of the function module has an error. In this manner, it can be avoided that a violation of the safety condition arises during operation of the function module in the modular industrial plant, or that such a violation is prevented by primary safety mechanisms in the plant. Such safety mechanisms are designed to quell an unsafe situation as soon as possible, irrespective of negative side effects for later operation of the plant. For example, the industrial process may be stopped at once, and/or the energy supply to the physical process module or even to the plant as a whole may be shut off at once even if this means that material currently being processed will cool and solidify in the physical process module, and hours of manually cleaning this out lie ahead.

The verifying of services and transitions between their states may, for example, be performed using a symbolic model verification tool, such as nuSMV or SPIN.

NUSMV is a symbolic model verifier tool which is a joint initiative from CMU and IRST. NUSMV is available at the URL "http://sra.itc.it/tools/nusmv". NUSMV provides a specification language using which it is possible to verify the properties of a model (described using the language). NUSMV is a language to specify a finite state transition system (FSM). Therefore, this language is a good fit to model the services of a function module. Furthermore, NUSMV allows concurrency; therefore, it is possible to model multiple service execution in a function module.

A NuSMV (as well as NuXMV) specification consists of module declarations, and each module may include variable declarations and constraints. System transitions are modeled by assignment constraints or transition constraints, which define the next values for declared variables in a module. An assignment explicitly gives a value for a variable in the next step, while a transition constraint, given by a Boolean formula, restricts the set of potential values following the transition. Each module can be instantiated by another one, for example, by the main module, as a local variable.

The main purpose of a model checker is to verify that a model satisfies a set of desired properties specified by the user. In NUSMV, the specifications to be checked can be expressed in two different temporal logics: the Computation Tree Logic CTL and the Linear Temporal Logic LTL extended with Past Operators. CTL and LTL specifications are evaluated by NUSMV in order to determine their truth or falsity in the finite state machine, FSM, of the function module and/or of one of its services. When a specification is discovered to be false, NUSMV constructs and prints a counterexample, i.e. a trace of the FSM that falsifies the property.

There is a special type of CTL property called invariant, which is a property that must be true for every reachable state for each execution.

In CTL-based property evaluation, the FSM is expanded as an infinite tree where each node denotes a state of the FSM, and an edge from one state to another is a possible state transition. A path in the tree denotes an evolution sequence of the FSM starting from a state through a series of state transitions. A path, therefore, simulates a possible execution of the system that the FSM models.

In CTL, one can write a formula AF p that means in all possible executions; the system must eventually reach a state when the condition p will be true. Similarly, the formula EF p means some execution exists when p will eventually be confirmed. The formula AG p means that p is globally true in all possible execution states. Likewise, EG p means that in some execution, p will be continuously true in all states of the execution.

Services can be modelled in various ways. We propose one approach to model service using NuSMV is as follows:

```
  MODULE service
  VAR
     srv_state: {idle, starting, execute, completing, pausing, paused,
   resuming, unholding, held, holding, completed, stopping, stopped,
   aborting, aborted, resetting};
  ASSIGN
     init(srv_state) := idle;
     next(srv_state) := case
          (srv_state=idle) : starting;
        (srv_state=starting) : execute;
        (srv state=execute) : {starting, completing, pausing, holding,
   stopping, aborting};
        (srv_state=completing) : completed;
        (srv_state=pausing) : paused;
        (srv_state=paused) : resuming;
        (srv_state=resuming) : execute;
        (srv_state=holding) : held;
        (srv_state=held) : unholding;
        (srv_state=unholding) : execute;
        (srv_state=completed) : resetting;
        (srv_state=stopping) : stopped;
        (srv_state=stopped) : resetting;
        (srv_state=aborting) : aborted;
        (srv_state=aborted) : resetting;
        (srv_state=resetting) : idle;
        TRUE: srv_state;
     esac;
```

This model template represents a generic service state transition defined in VDI 2658. This NuSMV model template can be modified to represent a particular function module service by adding conditions based on which the state transition should occur. For instance, one can state the IO signal, which determines the transition from starting to execute state. For instance, consider BPXX module's Fill and Disc services. Suppose that when Y0001.CloseFbk is TRUE, then Fill should go to Completing state, according to the cause and effect logic associated with the Running state of this service. This can be modeled as:

```
  MODULE taglist
  VAR
  AB001: 0..100;
      AB002: 0..100;
      AB052: 0..100;
      P0008: boolean;
      Y0006: boolean;
      Y0001: boolean;
      Y0002: boolean;
  MODULE service(tag1, tag2)
  VAR
      srv_state: {idle, starting, execute, completing, pausing,
  paused, resuming, unholding, held, holding, completed, stopping,
   stopped, aborting, aborted, resetting};
  ASSIGN
      init(srv_state) := idle;
      init(tag1) := FALSE;
      next(srv_state) := case
               (srv_state=idle) : starting;
               (srv_state=starting) : execute;
               (srv_state=execute) : {starting, holding, stopping,
   aborting} ;
               (srv_state=execute) & tag1 : completing;
               (srv_state=execute) & tag2 : pausing;
               (srv_state=pausing) : paused;
               (srv_state=paused) & !tag1: resuming;
               (srv_state=paused) & tag1: completing;
               (srv_state=completing) : completed;
               (srv_state=resuming) : execute;
               (srv_state=holding) : held;
               (srv_state=held) : unholding;
              (srv_state=unholding) : execute;
               (srv_state=completed) : resetting;
               (srv_state=stopping) : stopped;
               (srv_state=stopped) : resetting;
               (srv_state=aborting) : aborted;
               (srv_state=aborted) : resetting;
               (srv_state=resetting) : idle;
              TRUE: srv_state;
      esac;
      next(tag2) := case
              srv_state = execute : TRUE;
              srv_state = completing : FALSE;
              TRUE : tag2;
      esac;
      next(tag1) := case
              srv_state = completing : TRUE;
              TRUE : tag1;
      esac;
  MODULE main
  VAR
      tags : taglist;
      disc : service(tags.P0008, tags.Y0001);
      fill : service(tags.Y0006, tags.Y0002);
   CTLSPEC AG !(fill.srv_state = execute & disc.srv_state = execute)
   LTLSPEC !(fill.srv_state = idle -> F fill.srv_state=completed)
   LTLSPEC !(disc.srv_state = idle -> F disc.srv_state=completed)
   CTLSPEC AG (disc.srv_state = idle -> AF disc.srv_state=execute)
```

Likewise, the state transition condition can be associated with each state based on the cause-effect matrix.

The example of a safety condition may be defined using a CTL property as well:
CTLSPEC AG ! (fill.srv state = execute & disc.srv state = execute) ; } . This property means that for all execution states (G), of all execution paths (A), fill and disc should never be in "execute" state together.

In this example, this safety condition is not always satisfied for all possible scenarios. The counter-example is shown below.

```
   Trace Type: Counterexample
   -> State: 1.1 <-
     tags.AB001 = 0
     tags.AB002 = 0
     tags.AB052 = 0
     tags.P0008 = FALSE
     tags.Y0006 = FALSE
     tags.Y0001 = FALSE
     tags.Y0002 = FALSE
     disc.srv_state = idle
     fill.srv_state = idle
   -> State: 1.2 <-
     disc.srv_state = starting
     fill.srv_state = starting
   -> State: 1.3 <-
     disc.srv_state = execute
     fill.srv_state = execute
```

Intuitively, when both filling and discharge services are active, they can go to their respective execute states as there is no direct control preventing them from being in their execute state at the same time. Hence, as per the current model, this safety condition is violated.

Liveliness conditions (i.e., conditions for the function model to be considered live and functioning) may be modelled as well.

A possible liveness condition can be that every service should eventually reach the execute state for all possible cases. A CTL property can check this condition for the disc service:

```
 CTLSPEC AG (disc.srv_state = idle -> AF disc.srv_state =
 execute);
```

This property says that
- If disc's current state is idle, for all execution paths (A), its state will be execute in the future (F).
- This condition will be true for all execution states (G), of all execution paths (A).

Intuitively, as per the current model shown in the example, this condition will be true, i.e. a service, once it is in the idle state, it will eventually reach the execute state for all possible scenarios. Hence, the liveliness condition is satisfied.

Deadlock conditions may be modelled as well. A serious deadlock situation can be that a particular service from its idle state will never be able to reach the completed state under any circumstances. The following LTL property can check whether the following deadlock properties are true:

```
 LTLSPEC !state = idle -> F fill.srv_state=completed)
 and
 LTLSPEC !(disc.srv state = idle -> F disc.srv_state=completed).
```

The above formula for fill service states that
- The condition: "If the current state is idle, the service will eventually reach its completed state in the future"
- is never true, for all execution paths.

As per the current model, there is no way fill or disc service can reach their respective completed state. Hence this deadlock property will always be satisfied. The developer needs to do the following:
1. Modify the cause-effect and state transition logic for each service;
2. Generate the model as shown in the listing above; and
3. Check the deadlock LTL property. If the property is no longer satisfied, then there is no deadlock.

Using the property verification approach (in particular, in connection with properties of nodes in a graph of dependencies), there can be more complex property verification. Some of the properties are enumerated below.
- Will service A always trigger activation of service B?
- Will a service ever be in a situation where it cannot reach the completing state?
- From the execute state, will the service reach the completing state within a "certain time"?
- When a service is in the stop or abort state, is there any possibility that this service triggers another service?

Like NuSMV, SPIN is another explicit state model checker which supports LTL based verification (http://spinroot.com/spin/Man/). Like NuSMV, it allows the user to first define an initial state init which is executed at the beginning. The PROMELA language, a model specification language of SPIN, allows multiple processes to run asynchronously and communicate by reading and writing over a channel. The processes become synchronous if the channel length is set to 0.

The service verifier module performs the following tasks to generate an SMV model of a function module.
1. Service Verifier maintains a template of the standard state transition.
2. Service Verifier reads the taglist and the cause-effect logic associated with each state of a service. For this purpose, it uses the existing APIs of Module Design Workbench.
3. Once It reads the cause-effect logic, it checks the conditions for state transition, which is described as an "Effect". The "Cause" part becomes the input condition.
4. It augments the state transition template to attach the cause as conditions for state transition. It also attaches the effect, which changes output values, as the state transition output.
5. The service verifier completes state transitions for each service of the function module.
6. The service verifier creates a {\tt main} module that invokes these services. A sample {\tt main} module is shown above.
7. The service verifier creates a set of CTL specifications from a dictionary of CTL property templates.
8. The service verifier generates a complete SMV file and runs the verifier on this generated SMV.
9. The service verifier parses the output and reports the results to the user.

The following steps describe user actions and the internal tasks performed by the module Validator.
1. The FM compiler generates an intermediate form of a function module, comprising IO tag description, HMI description, service descriptions.
2. The verification is performed on the intermediate representation
   a. The IO tag verification module uses a set of rules to verify the correctness of the tags. The rulebase can be fine-tuned and modified externally.
   b. The structure verifier performs structural correctness checks such as usage of attributes as per VDI specification, and correct usage of existing library modules. It also checks for circular dependencies.
   c. The service correctness verifier reads these service descriptions, generates a verification code using the code template and property verification database. The code is then run through a formal verifier such as NuSMV to check for various semantic errors.
3. The errors are consolidated and reported in a user-friendly manner through the FM design workbench GUI.
4. The designer corrects the mistakes and recompiles the FM.
5. Step 1 - 4 is repeated till all errors are fixed.

In a further particularly advantageous embodiment, the function module is executed in a virtualized environment. During the execution of the function module, at least one input/output channel, property of a node in the topology of the function module, and/or state of at least one service is monitored. In this manner, errors in the design of the function module may be discovered even if they manifest themselves only under certain conditions. For example, an integer overflow may only occur in situations where the value of the integer climbs too high for the variable type to which it is being written.

If it is determined that the design of the function module has no error, the function module may be approved for use in the modular industrial plant. An industrial process may then be executed on the modular industrial plant with participation of this function module. The effect of the formal verification according to the present method is that during execution of the industrial process, malfunctions of the function module, and thus of the process as a whole, will be far less likely.

### DESCRIPTION OF THE FIGURES

In the following, the invention is illustrated using Figures without any intention to limit the scope of the invention. The Figures show:
Figure 1: Exemplary embodiment of the method 100 for verifying the design of a function module 2;
Figure 2: Exemplary module validator system 50 for performing the method 100;
Figure 3: Exemplary process flow 300 in the module validator system 50 shown in Figure 2.

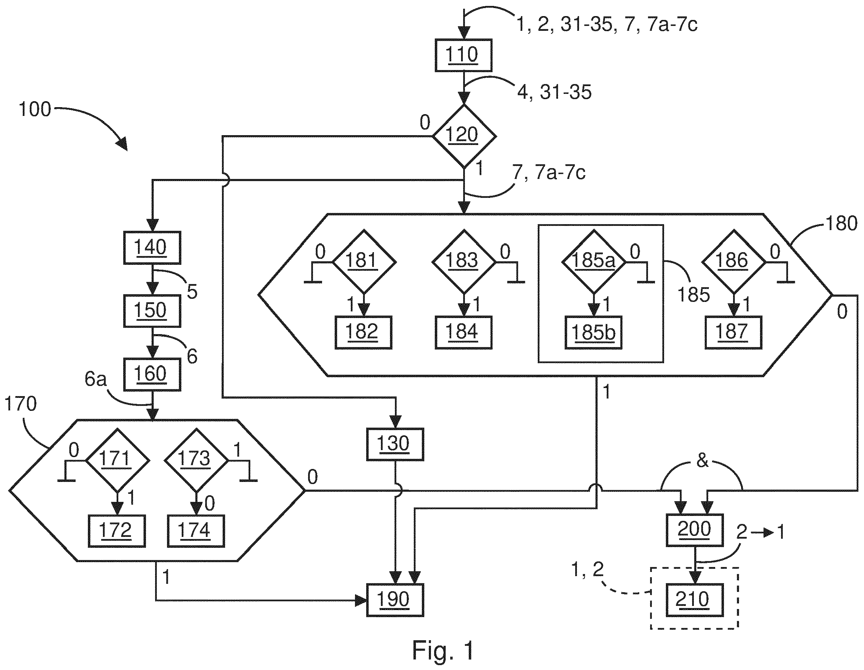

Figure 1 is a schematic flow chart of an embodiment of the method 100 for verifying the design of a function module 2 for use in a modular industrial plan 1. This function module 2 comprises control logic configured to accept sensor data and actuate a physical process module such that at least one process quantity and/or state quantity of the process module can be kept near a desired set-point value. It also comprises logic to accept commands from a superordinate management system. Communication between logics, as well as between the function module 2 and the rest of the modular industrial plant 1, is by input/output channels 31-35 representing parameters and/or variables.

In step 110, a ruleset 4 is obtained. This ruleset 4 comprises at least requirements for I/O channels 31-35 and their connections that are necessary conditions for the function module 2 to perform its intended function in the modular industrial plant 1.

In step 120, it is checked whether the input/output channels 31-35 of the function module 2 and their connections meet the rules in the ruleset 4.

If this is not the case, i.e., if at least one rule in the ruleset 4 is not met (truth value 0), it is determined, in step 130, that the design of the function module 2 has an error. In step 190, the use of the function module 2 in the modular industrial plant 1 is then prevented.

In principle, the further checks that will be described in the following may still be performed after it has been determined based on the I/O channels 31-35 already that the design of the function module 2 has an error, so as to give the designer of the function module a comprehensive list of design errors. But it also makes sense to first force the designer to get the basics regarding the I/O channels 31-35 right first before performing a more complex evaluation of the function module 2. It depends on the concrete application at hand what is better.

In the example shown in Figure 1, if no design errors have been found by checking the input/output channels 31-35 against the ruleset 4, further evaluation of the function module 2 is performed to detect potential design errors in other places.

In step 140, a topology of the function module 5 is determined. In step 150, from this topology 5, a graph 6 of dependencies is determined. In each of these dependencies, the function module 2, and/or at least one of its logics, is involved. This graph 6 of dependencies is traversed in step 160, and the encountered nodes 6a of the graph 6 are recorded. From these encountered nodes 6a, it is determined in step 170, based on at least one predetermined criterion, whether the design of the function module 2 has an error.

According to block 171, it may be checked whether there is a circular dependency of nodes. If this is the case (truth value 1), according to block 172, the design of the function module 2 is determined to have an error.

According to block 173, it may be checked whether all encountered nodes 6a possess a set of required properties, and/or whether all these properties conform to a predetermined specification. If this is not the case (truth value 0), according to block 174, the design of the function module 2 is determined to have an error.

For example, if these encountered nodes 6a are OPC UA entities, it may be checked whether these entities have all the mandatory OPC UA properties that they should have according to VDI 2658.

Alternatively or in combination to checking the dependency graph, in step 180, the services 7 of the function module 2 and the states 7a-7c in which each service 7 can be are evaluated. In particular, each service 7 can be in one out of a set of states 7a-7c at any one time. It is determined, based at least in part on the set of states 7a-7c and/or transitions between states 7a-7c, according to at least one predetermined criterion, whether the design of the function module 2 has an error.

According to block 181, it may be checked whether the reachability at least one state 7a-7c is dependent on at least one condition that cannot be fulfilled, and/or on at least two conditions that are mutually exclusive. If this is the case (truth value 1), according to block 182, it is determined that the design of the function module 2 has an error.

According to block 183, it may be checked whether at least one dependency for the reachability of at least one state 7a-7c is a circular dependency. If this is the case, according to block 184, it is determined that the design of the function module 2 has an error.

According to block 185, the set of states 7a-7c, and/or transitions between states 7a-7c, may be evaluated based at least in part on a cause-effect matrix of states 7a-7c and transitions between states 7a-7c.

In particular, according to block 185a, it may be checked whether at least one cause is tied to multiple effects, and/or whether multiple causes are tied to a same effect. If this is the case, according to block 185b, it is determined that the design of the function module 2 has an error.

According to block 186, it may be determined whether two services 7 can be in a running state 7a-7c simultaneously despite being mutually exclusive according to a predetermined safety condition. If this is the case (truth value 1), according to block 187, it is determined that the design of the function module 2 has an error.

No matter where exactly the design of the function module 2 was determined to have an error, if this happened at all, then the consequence is always the same: In step 190, the use of the faulty function module 2 in the modular industrial plant 1 is prevented.

But if no errors have been found anywhere (indicated by "&"), in step 200, the function module 2 may be approved for use in the modular industrial plant 1. In step 210, an industrial process may then be executed on the modular industrial plant with participation of this function module 2.

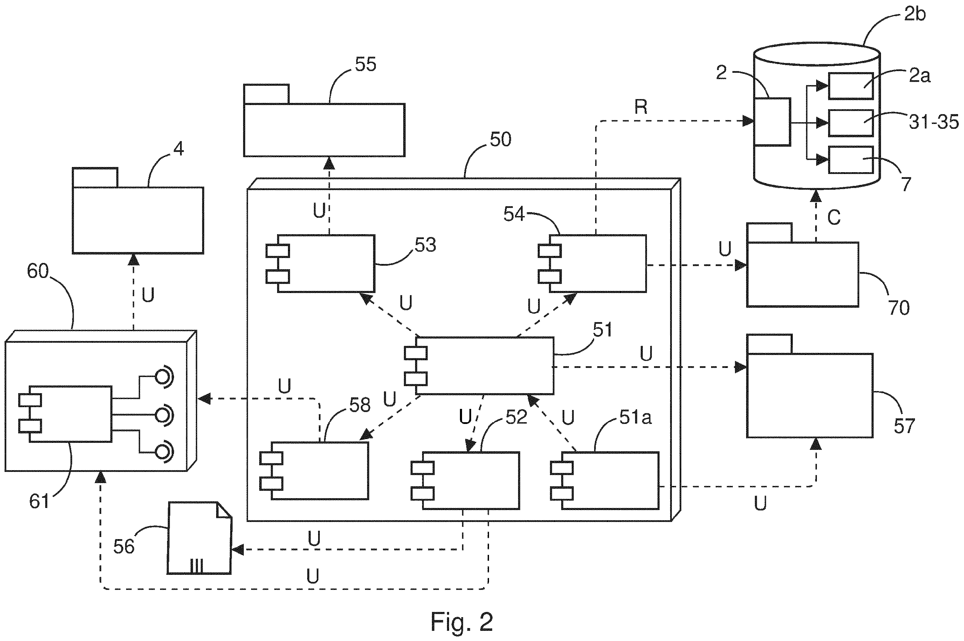

Figure 2 illustrates an exemplary module validator system 50 for performing the method 100. In this illustration, relationships between the different entities are denoted by dashed lines labelled with U for "use" or C for "create".

The validation engine 51 instructs a module loader 54 to read an intermediate form 2b of the function module 2. This intermediate form 2b has previously been created by the function module design workbench 70 that is being operated by the module designer. The intermediate form 2b comprises the function module 2, its human-machine interface 2a, its list of input/output channels 31-35 and its services 7. The validation engine 51 is operated via a validation engine user interface 51a.

The validation engine 51 instructs a tag and parameter verifier 58 to verify the input/output channels 31-35 of the function module 2. The tag and parameter verifier 58 invokes an expert system 60 with a rule engine 61 that in turn uses a ruleset 4. The rule engine 61 loads the ruleset 4, loads the fact base of facts on which the rules in the ruleset 4 depend, and decides which rule applies ("fires").

The validation engine 51 instructs a structure verifier 52 to examine the structure of the function module 2, as well as the dependencies in which this function module 2 is involved. The structure verifier 52 avails itself of a specification 56, here: a VDI 2658 metamodel that stipulates which property every node 6a in the graph 6 of dependencies should have. The structure verifier 52 also avails itself of the expert system 60.

The validation engine 51 also instructs a service verifier 53 to examine services provided by the function module 2. This service verifier 53 uses a verification toool, such as NuSMV, NuXMV, SPIN or Promela.

The outcome of the validation, and in particular any found errors, are communicated to the logging platform 57.

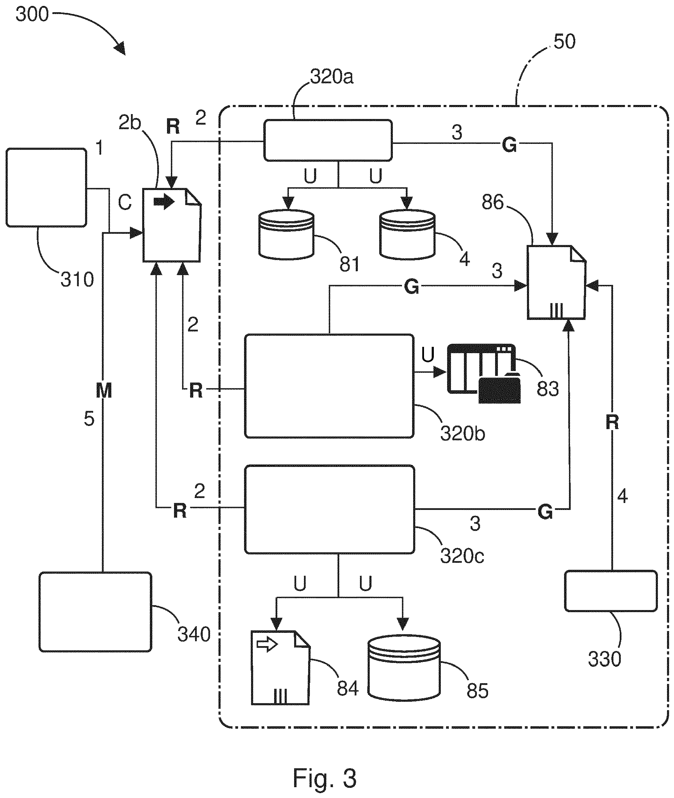

Figure 3 illustrates an exemplary process flow 300 in the module validator system 50 shown in Figure 2. Relationships between entities are denoted by solid lines labelled with R for "read", G for "generate", or M for "modify".

In step 310, the designer of the function module 2 creates the function module using the module design workbench 70 shown in Figure 2. The intermediate form 2b of the function module 2 results.

This intermediate form 2b is read in step 320a, where the semantic validation of the input/output channels and tags is performed. This validation avails itself of a target controller specification database 81, and also of a ruleset 4.

The intermediate form 2b is also read in step 320b, where the structural validation of the function module 2 is performed. In particular, this step verifies the correctness of nested function modules, as well as the proper integration of third-party modules. To this end, a module library 83 is consulted. This module library 83 comprises the function modules 2 of the industrial plant 1, as well as third-party module type packages, MTPs.

The intermediate form 2b is also read in step 320c, where the correct operation of services 7 provided by the function module 2 is checked. In particular, it is checked whether
- safety requirements are met (e.g., with respect to particular services that are not to be active at the same time);
- services are "lively", i.e., will eventually reach a "running" state (or a "complete" state if there is one); and
- there are no deadlocks that prevent a service from reaching a "running" or "completed" state, or from moving out of an "idle" state, forever.

This step 320c avails itself of service verification code templates 84, as well as a service verification property database 85.

All three steps 320a, 320b and 320c contribute to the generation of an error report 86. In step 330, any identified errors in the design of the function model 2 are shown in the GUI of the function module design workbench 70.

In response to the shown errors, in step 340, the designer of the function module 2 modifies the function module 2 using the function module design workbench 70 to remedy the errors.

### List of reference signs:

- 1: modular industrial plant
- 2: function module for use in modular industrial plant 1
- 2a: human-machine interface of function module 2
- 2b: intermediate state of function module 2
- 31-35: input/output channels of function module 2
- 4: ruleset
- 5: topology of function module 2
- 6: graph of dependencies
- 6a: nodes in graph 6
- 7: services provided by function module 2
- 7a-7c: states of services 7
- 50: module validator system
- 51: validation engine
- 51a: user interface of validation engine 51
- 52: structure verifier in module validator system 50
- 53: service verifier in module validator system 50
- 54: module loader in module validator system 50
- 55: verification tool for service verification
- 56: specification for structure verification
- 57: logging platform
- 58: tag and parameter verifier in module validator system 50
- 60: expert system
- 61: rule engine in expert system 60
- 70: function module design workbench
- 81: target controller specification database
- 83: module library
- 84: service verification code templates
- 85: service verification property database
- 86: error report
- 100: method for verifying design of function module 2
- 110: obtaining ruleset 4
- 120: checking input/output channels 31-35 against ruleset 4
- 130: determining that design of function module 2 has an error
- 140: determining topology of function module 2
- 150: determining graph 6 of dependencies
- 160: traversing graph 6 of dependencies, recording nodes 6a
- 170: determining potential error based on nodes 6a
- 180: determining potential error based on services 7, states 7a-7c
- 181: checking for unreachability of state
- 182: determining that design of function module 2 has error
- 183: checking for circular dependencies
- 184: determining that design of function module 2 has error
- 185: evaluating states 7a-7c based on cause-effect matrix
- 185a: determining one-to-many, many-to-one relationships
- 185b: determining that design of function module 2 has error
- 186: checking whether services 7 run simultaneously
- 187: determining that design of function module 2 has error
- 190: preventing use of erroneous function module 2 in plant 1
- 200: approving function module 2 for use in plant 1
- 210: executing industrial process on modular plant 1
- 300: process flow in module validator system 50
- 310: creating function module 2 using workbench 70
- 320a: performing I/O channels semantic validation
- 320b: performing structural validation
- 320c: verifying correctness of services
- 330: showing errors in module design workbench 70 GUI
- 340: modifying function module 2 to remedy errors

## Claims

1. A computer-implemented method (100) for verifying the design of a function module (2) for use in a modular industrial plant (1), wherein the function module (2) comprises control logic configured to accept sensor data and actuate a physical process module such that at least one process quantity and/or state quantity of the process module can be kept near a desired set-point value, as well as logic to accept commands from a superordinate management system, and communication between logics, as well as between the function module (2) and the rest of the modular industrial plant (1), is by input/output channels (31-35) representing parameters and/or variables, the method comprising the steps of:
• obtaining (110) a ruleset (4) comprising at least requirements for I/O channels (31-35) and their connections that are necessary conditions for the function module (2) to perform its intended function in the modular industrial plant (1);
• checking (120) whether the input/output channels (31-35) of the function module (2) and their connections meet the rules in the ruleset (4); and
• in response to determining that at least one rule in the ruleset (4) is not met, determining (130) that the design of the function module (2) has an error, and preventing (190) use of the function module (2) in the modular industrial plant (1).

2. The method (100) of claim 1, wherein at least one rule in the ruleset (4) stipulates that:
• all parameters and/or variables must have a measurement unit attached; and/or
• whenever a parameter and/or variable is passed from one logic or entity to another, the measurement unit associated with this parameter and/or variable on the sending end must match the measurement unit associated with this parameter and/or variable on the receiving end; and/or
• nested ranges for parameters and/or variables must be consistent; and/or
• set-points for parameters and/or variables must be in the allowed range for these parameters and/or variables; and/or
• values to be written to a parameter and/or variable must be compatible with the type of the parameter and/or variable; and/or
• connections between entities are all between an output channel of the one entity and an input channel of the other entity; and/or
• all input channels that are required for operation of the function module (2), and/or of one of its logics, are connected.

3. The method (100) of any one of claims 1 to 2, further comprising:
• determining (140) a topology (5) of the function module (2);
• determining (150), from this topology (5), a graph (6) of dependencies in which the function module (2), and/or at least one of its logics, are involved;
• traversing (160) this graph (6) of dependencies, recording the encountered nodes (6a) of the graph (6);
• determining (170), from the encountered nodes (6a), based on at least one predetermined criterion, whether the design of the function module (2) has an error.

4. The method (100) of claim 3, wherein, in response to determining (171), from the encountered nodes, that there is a circular dependency of nodes, the design of the function module (2) is determined (172) to have an error.

5. The method (100) of any one of claims 3 to 4, further comprising:
• determining (173) whether all encountered nodes (6a) possess a set of required properties, and/or whether all these properties conform to a predetermined specification; and
• in case the outcome of this determining is negative, determining (174) that the design of the function module (2) has an error.

6. The method (100) of any one of claims 1 to 5, wherein the function module (2) has a set of services (7), each service (7) can be in one out of a set of states (7a-7c) at any one time, and the method further comprises: determining (180), based at least in part on the set of states (7a-7c) and/or transitions between states (7a-7c), according to at least one predetermined criterion, whether the design of the function module (2) has an error.

7. The method (100) of claim 6, wherein, in response to determining (181) that the reachability at least one state (7a-7c) is dependent on at least one condition that cannot be fulfilled, and/or on at least two conditions that are mutually exclusive, it is determined (182) that the design of the function module (2) has an error.

8. The method (100) of any one of claims 6 to 7, wherein, in response to determining (183) that at least one dependency for the reachability of at least one state (7a-7c) is a circular dependency, it is determined (184) that the design of the function module (2) has an error.

9. The method (100) of any one of claims 6 to 8, wherein the set of states (7a-7c), and/or transitions between states (7a-7c), is evaluated (185) based at least in part on a cause-effect matrix of states (7a-7c) and transitions between states (7a-7c).

10. The method (100) of claim 9, wherein, in response to determining (185a) that at least one cause is tied to multiple effects, and/or multiple causes are tied to a same effect, it is determined (185b) that the design of the function module (2) has an error.

11. The method (100) of any one of claims 6 to 10, wherein, in response to determining (186) that two services (7) can be in a running state (7a-7c) simultaneously despite being mutually exclusive according to a predetermined safety condition, it is determined (187) that the design of the function module (2) has an error.

12. The method (100) of any one of claims 1 to 11, further comprising:
• executing the function module (2) in a virtualized execution environment; and
• monitoring, during the execution of the function module (2), at least one input/output channel, property of a node in the topology of the function module, and/or state of at least one service.

13. The method (100) of any one of claims 1 to 12, further comprising: in response to determining that the design of the function module (2) has no error,
• approving (200) the function module (2) for use in the modular industrial plant (1); and
• executing (210) an industrial process on the modular industrial plant (1) with participation of this function module (2).

14. A computer program, comprising machine-readable instructions that, when executed by one or more computers and/or compute instances, cause the one or more computers and/or compute instances to execute the method (100) of any one of claims 1 to 13.

15. A non-transitory machine-readable data carrier and/or a download product with the computer program of claim 14.

16. One or more computers and/or compute instances with the computer program of claim 14, and/or with the machine-readable data carrier and/or download product of claim 15.
